# EUROPEAN PATENT APPLICATION

(11) **EP 3 915 818 A1**
(43) Date of publication of application: **01.12.2021**
(21) Application number: 20176635.9
(22) Date of filing: 26.05.2020
(51) Int. Cl.: B60K 6/46, B60W 20/40, B60W 50/08

(54) **METHOD AND SYSTEM FOR OPERATING A MOTOR VEHICLE**

(71) Applicant: Bak Motors AG, 6302 Zug (CH)
(72) Inventor: Bak, Tibor István, 8805 Richterswil (CH)
(74) Representative: P&TS SA (AG, Ltd.)

(57) **Abstract**

According to the present invention, there is provided a method for operating a motor vehicle designed for electric motor driving only, the motor vehicle comprising at least one electric motor (16) and a battery system (15) for powering the electric motor (16); at least one range extender (2), wherein the range extender comprises at least one internal combustion engine (10); and a controller (20) for the controlling of components of the motor vehicle (1), the method comprising the steps of controlling a rotational speed of the internal combustion engine (10) using at least one control pedal (19) of the motor vehicle (1); and generating a sound from the range extender (2).

## Description

### Field of the invention

The present invention concerns a system and a method for operating an electric motor vehicle comprising a range extender device. In particular, it relates to the operation of the electric vehicle to generate and control sounds from the electric motor vehicle.

### Background

Electric motor vehicles are recently gaining increased popularity, and their market share is growing rapidly compared to the traditional motor vehicles such as those powered by gasoline or diesel engines. The electric vehicles are quickly entering the markets ranging from traditional city cars and family cars up to hypercars and racing cars. Electric vehicles come in various implementations such as pure electric vehicles, also known as battery electric vehicles (BEV) where the only source of power is built-in battery system and hybrid electric vehicles where in addition to the electric motor and battery system there is provided an alternative power source. Such vehicles use a combination of electric power and gasoline or diesel power to propel the vehicle.

Electric vehicles offer many advantages such as low running costs, a small number of moving parts, easier maintenance, and much better environmental performance compared to traditional vehicles with internal combustion engines. Regarding racing cars, electric cars offer the advantage of the almost instantaneous acceleration. Some of the disadvantages of the electric motor vehicles are the high initial cost and relatively low running range in terms of the kilometers available from one battery charge.

One particular feature of the electric vehicles is a very low sound level which is produced during the operation. This feature may be advantageous to reduce the general noise level especially in crowded cities. However, the lack of noise might be also dangerous for pedestrians that might not be aware of the incoming vehicle. For this reason, various solutions based on the artificial noise generation for electric vehicles were developed. One of the proposed solutions is to use speakers with prerecorded sounds.

Regardless of the efficiency and cost-effectiveness of these solutions, there is still a lot of resistance to the idea of the artificial generation of the sounds in electric vehicles. This applies especially in the area of racing and hyper-cars where the authentic car sounds are particularly appreciated, recognized, and requested from the users and the audience. One of the typical examples is the experience of racing or watching the race, which heavily depends on the sounds created by racing cars.

It is an objective of the present invention to mitigate at least some of the disadvantages associated with existing solutions in the area of the sound generation for electric vehicles.

### Summary of the invention

According to one aspect of the present invention, there is provided a method for operating a motor vehicle designed for electric motor driving only, the motor vehicle comprising: at least one electric motor and a battery system for powering the electric motor; at least one range extender, wherein the range extender comprises at least one internal combustion engine; and a controller for the controlling of components of the motor vehicle, the method comprising the steps of controlling a rotational speed of the internal combustion engine using at least one control pedal of the motor vehicle; and generating a sound from the range extender.

In one embodiment, the range extender further comprises an electric generator connected to the internal combustion engine for converting mechanical power to electrical power.

In one preferred embodiment, the internal combustion engine is Wankel engine. In another preferred embodiment the rotational speed of the internal combustion engine is more than 7000 rpm.

In one embodiment, the range extender comprises a fuel tank and/or an exhaust system.

In one embodiment, the controlling of the rotational speed of the internal combustion engine comprises controlling of an amount of an inlet fuel and/or inlet air.

In one embodiment, controlling a rotational speed of the internal combustion engine using a control pedal of the motor vehicle comprises the step of sending an input signal from the control pedal to the controller.

In one embodiment, the step of controlling the rotational speed of the internal combustion engine comprises changing the rotational speed of the internal combustion engine.

In one embodiment, the rotational speed of the internal combustion engine is synchronized with a movement of the control pedal.

In one preferred embodiment the control pedal of the motor vehicle is an acceleration pedal. In one embodiment the control pedal is controlled by the driver's leg, arm or voice command.

In one embodiment, a sound level generated by the range extender is the function of an input signal created by the control pedal.

In one preferred embodiment the sound level generated by the range extender is higher than 60 dB. In another embodiment, the sound level is in the range from 70 dB to110 dB.

In one embodiment, the sound level generated by the range extender is proportional to the amount of the acceleration of the motor vehicle.

In one embodiment, the step of controlling the speed of the internal combustion engine comprises de-coupling of the range extender from the electric motor.

In one embodiment, the sound is generated when the motor vehicle is not moving.

In accordance with another aspect of the invention a motor vehicle designed for electric motor driving only is provided. The motor vehicle is comprising:
- a vehicle drive system comprising at least one electric motor and a battery system for powering the electric motor;
- at least one range extender comprising an internal combustion engine, an exhaust system, a fuel tank, and an electric generator configured to convert mechanical power to electric power, wherein the electric generator is configured to be driven by the internal combustion engine; and
- a controller configured to control the rotational speed of the internal combustion engine using an input signal from a control paddle of the motor vehicle.

### Short description of the drawings

Embodiments of the present invention will be described by way of example only, with reference to the following figures, in which:
Figure 1 shows a schematic block diagram of a motor vehicle in accordance with one embodiment.
Figure 2 shows another schematic block diagram of a motor vehicle in accordance with one embodiment.

### Detailed description

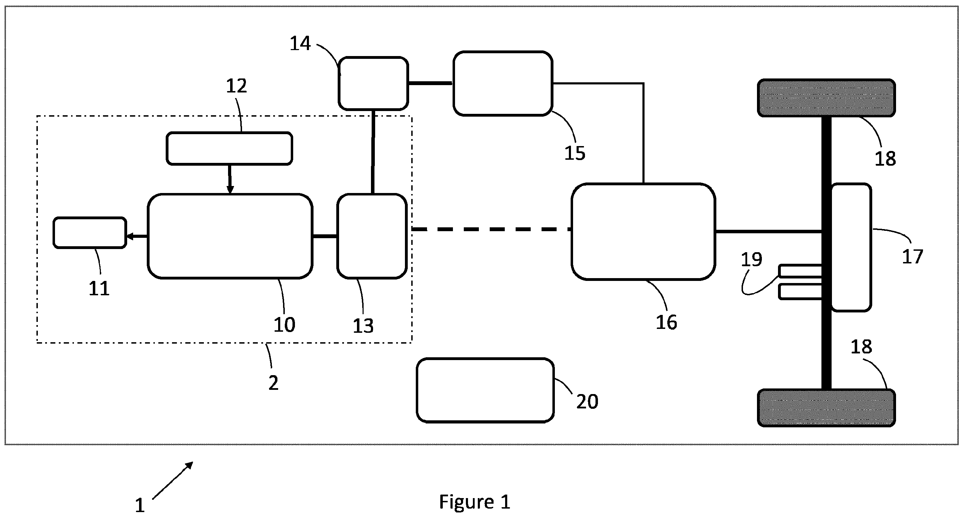

Figure 1 shows a motor vehicle 1 in accordance with an embodiment of the invention. The motor vehicle 1 is driven by an electric motor 16 only, and the electric motor 16 is powered by a battery system 15, which stores electrical energy to be used by the electric motor 16. Normally, in electric vehicles power is converted from direct current (DC) battery to alternating current (AC) electric motor. The battery system may comprise an inverter (not shown), which is a device that converts DC power to AC power to be used by the electric motor 16. The inverter may change the speed at which motor 16 rotates by adjusting the frequency of the alternating current. In addition, the inverter may increase or decrease the power of the electric motor 16 by adjusting the amplitude of the current.

In general, the battery system 15 is charged using the external charging system such as an external power grid system when the motor vehicle is not in operation. The typically available range for the electric vehicles coming from one charging cycle is from 50 km up to 500 km for the vehicle with a big battery capacity. In general, the driving range is proportional to the size of the battery system. The battery system may comprise a battery pack made up of the plurality of battery modules where every module comprises several individual battery cells. The battery cells may be lithium-based. Also, the battery system 15 may comprise a battery management system (BMS) that manages the operation of the battery pack.

The electric motor 16 may power one or two axles of the vehicle, and consequently rotate the wheels 18 of the vehicle. In one embodiment, every wheel 18 of the vehicle has a separate electric motor and separate control. This configuration offers more flexibility and control, which is particularly advantageous in the area of e-racing cars. The driving is normally controlled by the driver via vehicle cockpit 17, which may include a steering wheel and a dashboard showing various information such as the speed of the vehicle.

The control of the speed, acceleration, and braking may be performed using one or more control pedals 19. For example, the accelerator pedal sends a signal to the controller 20 which may adjust the frequency of the AC power from the inverter to the electric motor 16, and consequently change the speed of the motor vehicle 1. The control pedals 19 might be on the floor to be actuated by the leg of the user, but also, the pedals 19 may be controlled by the arms, for example when the control pedals are positioned on the driving wheel or somewhere else in the cockpit. The control pedals 19 might be controlled by the voice command of the user. Finally, the control pedal might be controlled by the series of predefined instructions, such as auto-pilot instructions. According to the invention, the word pedal is used in the broader sense, but the control pedals which are actuated by the leg of the user or by the arm of the users are the most preferred embodiments.

During the driving of the vehicle, the driver may be pushing the pedal 19 to control the acceleration and speed of the vehicle. Pushing the pedal to the maximum position i.e. all the way to the floor the maximum speed is achieved. When the pedal 19 is pushed with higher speed the higher acceleration is achieved.

In electric car such as the motor vehicle 1, the pressing of the pedal 19 causes the electric motor to deliver more power to the axle and consequently to rotate the wheels 18 faster. This is achieved by drawing more power from the battery system, which on the other side causes the depletion of the battery system charge.

The control of the components of the motor vehicle 1 may be performed by the controller 20. In one embodiment, the controller 20 is one device, but the controller 20 may be implemented as several independent or interconnected units.

The problem of the low driving range of battery-only motor vehicles can be addressed by introducing an additional power source. In one embodiment, the additional power source is a range extender 2. The range extender 2 comprises an internal combustion engine 10, and it may comprise an electric generator 13.

The electric generator 13 is configured to convert the mechanical power of the rotation of the internal combustion engine 10 to electric power and to create an electric current. The electric generator 13 may be connected to the internal combustion engine via a shaft, and it is configured to be driven by the internal combustion engine 10. In one embodiment the rotational speed of the internal combustion engine 10 is directly proportional to the speed of the rotation of the generator 13, while in the other embodiment they are decoupled via gear changing system.

For example, in one embodiment the range extender may comprise a fuel supply system 12. The fuel system 12 may supply various types of fuels such as gasoline, diesel, or hydrogen fuel, which depends on the type of the internal combustion engine 10. The internal combustion engine 10 may have different forms such as a four-stroke engine and a two-stroke engine. In one preferred embodiment, the internal combustion engine 10 is a rotary Wankel engine. In another preferred embodiment, the internal combustion engine is capable to produce rotational speed such as more than 7000 rotation per minute (rpm). In another embodiment, the internal combustion engine is capable to produce high rotational speed such as more than 10000 rotation per minute (rpm).

In one embodiment the range extender may comprise an exhaust system 11 to drive the exhaust gases from the engine outside from the vehicle.

Rotation of the internal combustion engine 10 causes the rotation of the electric generator 13 which produces the electric current. In one embodiment the current is alternating electric current (AC). In this embodiment, the alternating electric current is rectified in the rectifier 14 to produce direct current (DC). In another embodiment the current coming from the electric generator 13 is direct electric current.

In one embodiment, the direct current from the rectifier 14 or the generator 13 is used to charge the battery 15. In another embodiment, the alternating current coming from the generator is used to directly drive the electric motor 16 as shown by the dashed line in Figure 1. The operation and control may be done by the controller 20.

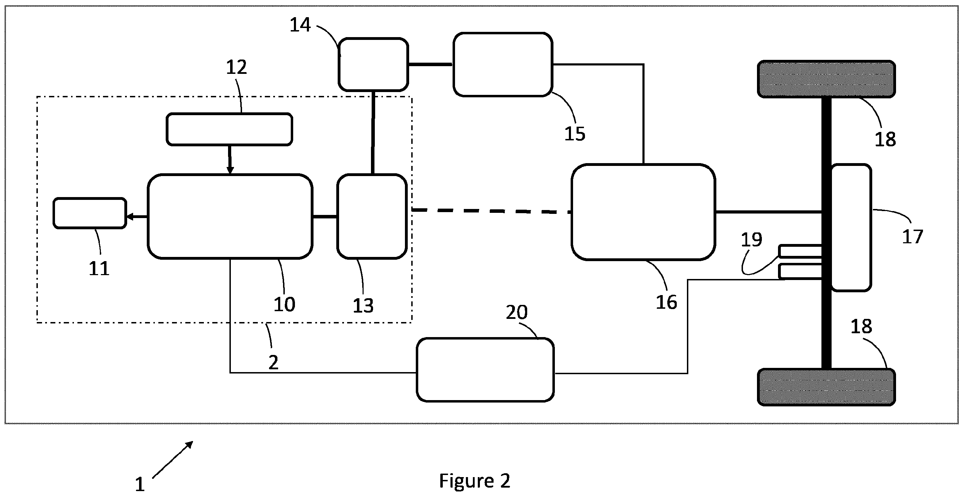

Figure 2 shows another schematic block diagram of the motor vehicle 1. The motor vehicle 1 is designed for electric driving only. The range extender 2 is not connected to the axles of the vehicle, and it cannot independently propel the vehicle 1. The control pedal 19 may be connected to the controller 20 so that the input signal from the pedal 19 is transferred to the controller 20. This connection may be wired or wireless. In one embodiment the controller may also be connected to the range extender 2. The controller 20 may be a dedicated controller that connects the pedal and the range extender 2.

In the normal operation of the range extenders known from the art, the range extender is driven at a constant and low rpm, and in predetermined fashion without input from the driver. This operation allows high efficiency because the internal combustion engine is driven at optimal rotational speed to drive the electric generator. In addition, such an operation produces the low-level sound from the internal combustion engine which is very desirable in most of the applications.

In one embodiment according to the invention a method for operating a motor vehicle designed for electric motor driving only comprises the steps of controlling a rotational speed of the internal combustion engine 10 using a control pedal 19 of the motor vehicle to generate a sound from the range extender. In one embodiment, contrary to the traditional methods of the operation of the range extender, rpm of the internal combustion engine 10 may not be kept constant, but it is changing which causes the sound generation from the internal combustion engine. This sound may be further enhanced using specific exhaust system 11.

In one embodiment, while the electric vehicle is in motion, the control of the pedal 19, such as pressing of the pedal may have then two functions. First, the electric motor 16 supplies more power to the axle and wheels 18. Secondly, the rotational speed of the internal combustion engine is increased. The increase of the rpm of the internal combustion engine 10 creates the desired sound in the range extender 2 which may increase the driver satisfaction while driving the electric vehicle 1. In another embodiment the internal combustion engine is controlled so to provide high rpm outside the efficient range of the engine. For example, for the engine that is the most efficient at 3000 rpm, the engine is driven at 7000 rpm or 10000 rpm. The driving in these regions of rpm may produce a sound with a high level, which may be advantageous for driver satisfaction. The sound levels of the motor vehicles are usually expressed in dB units.

In one embodiment, there are separate control paddles 19 for the control of the electric motor 16 and the range extender 2. In this way the sound generation can be performed independently of the acceleration or de-acceleration of the motor vehicle 1.

In one embodiment, the method is applied while the motor vehicle 1 is not in motion. Such an example may be while the vehicle 1 is waiting on the red light or when the vehicle is ready to start a race. In this embodiment, pressing the control paddle does not request the electric motor to supply the power to rotate the wheels 18, but only to instruct the controller 20 to change rpm of the internal combustion engine 10 and to create the sound.

In one embodiment the controlling of the rotational speed of the internal combustion 10 engine comprises that controller change the amount of an inlet fuel and/or inlet air. For example, pressing the pedal 19 may cause the amount of inlet air to the internal combustion engine to increase. To keep the fuel/air ratio, the amount of inlet fuel may increase as well, and finally producing higher rotational speed and a higher level of engine sound.

The input signal from the control pedal 19 to the controller 20 may be in the form of the electric signal. For example, the control pedal may be connected to the potentiometer which is connected further to the controller 20.

In one embodiment the rotational speed of the internal combustion engine is synchronized with the movement of the control pedal. For example, the pressing of the pedal may produce a continuous increase of rpm of the engine 10, while the releasing of the pedal 19 may produce the reduction of the rpm of the engine 10.

The sound levels of the motor vehicles are usually expressed in dB units. In one preferred embodiment the generated sound level is higher than 60 dB, and preferably the generated sound level is in the range from 70-110dB. Such a high-level of generated sound is particularly adapted for e-racing or hyper electric cars.

In one embodiment the step of controlling the speed of the internal combustion motor comprises decoupling of the range extender 2 from the electric motor. For example, the connection between range extender 2 and the battery 14 and the electric motor 15 may be temporarily or permanently disconnected so that the only function of the range extender 2 is a sound generation without any supply of the current to the battery system 15 or the electric motor 16.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

### List of parts:

- 1: Motor vehicle
- 2: Range extender
- 10: Internal combustion engine
- 11: Exhaust system
- 12: Fuel tank
- 13: Electric generator
- 14: Converter
- 15: Battery system
- 16: Electric motor
- 17: Cockpit
- 18: Wheels
- 19: Control pedal
- 20: Controller

## Claims

1. A method for operating a motor vehicle (1) designed for electric motor driving only, the motor vehicle comprising:
- at least one electric motor (16) and a battery system (15) for powering the electric motor (16);
- at least one range extender (2), wherein the range extender comprises at least one internal combustion engine (10); and
- a controller (20) for the controlling of components of the motor vehicle (1), the method comprising the steps of:
- controlling a rotational speed of the internal combustion engine (10) using at least one control pedal (19) of the motor vehicle (1); and
- generating a sound from the range extender (2).

2. The method of claim 1, wherein the range extender (2) further comprises an electric generator (13) connected to the internal combustion engine (10) for converting mechanical power to electrical power.

3. The method of any of the preceding claims, wherein the internal combustion engine (10) is Wankel engine and/or wherein the rotational speed of the internal combustion engine (10) is more than 7000 rpm.

4. The method of any of the preceding claims, wherein the range extender (2) comprises a fuel tank (12) and/or an exhaust system (11).

5. The method of any of the preceding claims, wherein the controlling of the rotational speed of the internal combustion engine (10) comprises controlling of an amount of an inlet fuel and/or inlet air.

6. The method of any of the preceding claims, wherein controlling a rotational speed of the internal combustion engine (10) using a control pedal (19) of the motor vehicle (1) comprises the step of sending an input signal from the control pedal(19) to the controller (20).

7. The method of any of the preceding claims, wherein the step of controlling the rotational speed of the internal combustion engine (10) comprises changing the rotational speed of the internal combustion engine (10).

8. The method according to any of the preceding claims, wherein the rotational speed of the internal combustion engine (10) is synchronized with a movement of the control pedal (19).

9. The method according to any of the preceding claims, wherein the control pedal (19) of the motor vehicle is an acceleration pedal and/or wherein the control pedal is controlled by driver's leg, arm or voice command.

10. The method according to any of the preceding claims, wherein a sound level generated by the range extender (2) is the function of an input signal created by the control pedal.

11. The method according to any of the preceding claims wherein the sound level generated by the range extender (2) is higher than 60 dB and/or wherein the sound level is in the range from 70 dB to110 dB.

12. The method of any of the preceding claims, wherein the sound level generated by the range extender (2) is proportional to the amount of the acceleration of the motor vehicle.

13. The method of any of the preceding claims, wherein the step of controlling the speed of the internal combustion engine (10) comprises decoupling of the range extender (2) from the electric motor (16).

14. The method of any of the preceding claims, wherein the sound is generated when the motor vehicle (1) is not moving.

15. A motor vehicle (1) designed for electric motor driving only, comprising:
- a vehicle drive system comprising at least one electric motor (16) and a battery system (15) for powering the electric motor (16);
- at least one range extender (2) comprising an internal combustion engine (10), an exhaust system (11), a fuel tank (12) and an electric generator(13) configured to convert mechanical power to electric power, wherein the electric generator is configured to be driven by the internal combustion engine (10); and
- a controller (20) configured to control the rotational speed of the internal combustion engine (10) using an input signal from a control paddle (19) of the motor vehicle.
